# EUROPÄISCHE PATENTSCHRIFT

(11) **EP 3 914 095 B1**
(45) Veröffentlichungstag und Bekanntmachung des Hinweises auf die Patenterteilung: **27.12.2023**
(21) Anmeldenummer: 20701429.1
(22) Anmeldetag: 17.01.2020
(51) Int. Cl.: A23L 5/10, B65D 33/01, B65D 77/22, B65D 81/34, B65D 33/16, B65D 51/16

(54) **VERSCHLUSSEINRICHTUNG FÜR EINEN BEHÄLTER ZUM GAREN VON NAHRUNGSMITTELN**
CLOSING DEVICE FOR A CONTAINER FOR COOKING FOOD
UNITÉ DE FERMETURE POUR UN CONTENANT POUR CUIRE DE PRODUITS ALIMENTAIRES

(30) Priorität: 22.01.2019 CH 692019
(43) Veröffentlichungstag der Anmeldung: 01.12.2021
(73) Patentinhaber: Forster, Frank, 6015 Luzern (CH)
(72) Erfinder: FORSTER, Frank, 6015 Luzern (CH); CATARCI, Francesco, 6340 Baar (CH)
(74) Vertreter: Luchs, Willi
(86) Internationale Anmeldenummer: PCT/EP2020/051149
(87) Internationale Veröffentlichungsnummer: WO 2020/152055

(56) Entgegenhaltungen:
- EP-A1- 3 033 948
- US-A1- 2003 152 296

## Beschreibung

Die Erfindung betrifft eine Verschlusseinrichtung für einen Behälter zum Garen von Nahrungsmittel nach dem Oberbegriff des Anspruchs 1.

Nahrungsmittel werden bei einer vorzüglichen Kochvariante in einem hitzebeständigen, mikrowellentauglichen und/oder druckstabilen Beutel in einem Mikrowellengerät, einem Wasserbad, einem Steamer oder ähnlichen gegart, mittels dem sich mehrere Vorteile ergeben. Gegarte Nahrungsmittel in solchen Beuteln behalten ihren Geschmack weitgehend und der Zustand nach dem Garen kann beliebig gewählt werden, ob zum Beispiel das Gemüse noch knackig oder eher weich sein soll. Insbesondere bei einem Garen in einem Mikrowellengerät wird dies innerhalb von wenigen Minuten erreicht und es können damit ganze Menüs in sehr kurzer Kochzeit und aber trotzdem hoher Kochqualität hergerichtet werden. Das Dokument US-A-2003/0152296 offenbart einen Mikrowellen-Kochbehälter, welcher einen Zugang zu einem Inneren des Beutels und einen Verschlussmechanismus mit Schliesselementen zum Abdichten des offenen Endes des Beutels mit langgestreckten Elementen umfasst. Der Behälter weist zudem eine Ventilanordnung auf, die eine kontrollierte Abgabe von unter Druck stehendem Fluid aus dem Beutelinneren bereitstellt, wenn ein positiver Druck, der gleich oder grösser als ein vorbestimmter Druck ist, innerhalb des Beutelinneren erzeugt wird. Die Ventilanordnung umfasst ein Entlüftungselement und einen Durchflussbegrenzer. Das Entlüftungselement ist am offenen Ende des Beutels angeordnet. Sein innerer Durchgang stellt einen Austrittspfad zum Ablassen eines unter Druck stehenden Fluids aus dem Inneren des Beutels bereit. Eine öffnende Dichtung ist am äusseren Ende des Durchgangs angeordnet.

Der Erfindung liegt die Aufgabe zugrunde, eine Verschlusseinrichtung für einen Behälter zum Garen von Nahrungsmitteln bereitzustellen, insbesondere einen Beutel, wodurch ein kontrolliertes Garen ermöglicht wird und dabei die Handhabung des Behälters für das Garen beim Auffüllen, Aufbewahren und Entnehmen der Nahrungsmittel aus diesem einfach zu bewerkstelligen ist.

Diese Aufgabe ist erfindungsgemäss durch die Merkmale des Anspruchs 1 gelöst.

Erfindungsgemäss wird die Verschlusseinrichtung mit dem Behälter verbunden, welche mit einem Überdruckventil ausgestattet ist, durch welches der Behälter beim Garen des eingefüllten Nahrungsmittels bei einem bestimmten Überdruck des Mediums geöffnet bzw. beim Absinken des Überdrucks geschlossen wird.

Mit dieser Verschlusseinrichtung kann der Behälter zum einen sehr einfach geschlossen werden und es wird ein optimales Garen des in den Behälter eingefüllten Nahrungsmittels erzielt, mittels dem der Garungsprozess bei vorgegebener Kochleistung wiederholbar das gleiche Ergebnis ergibt und es ist dabei ein absolut schnelles Herrichten der Nahrungsmittel ermöglicht.

Erfindungsgemäss weist diese Verschlusseinrichtung wenigstens ein inneres längliches Halteelement sowie mindestens ein dieses umgebenden Hülsenkörper auf, bei der dieser mit einer Öffnung versehene Behälter zwischen dieses Halteelement und den Hülsenkörper sowie durch einen Längsschlitz in letzterem führbar ist. Das Halteelement und der dieses umgebende Hülsenkörper sind dabei derart ausgestaltet, dass sie dieses Überdruckventil bilden.

Sehr vorteilhaft ist zur Bildung dieses Überdruckventils zwischen dem inneren Halteelement und dem Hülsenkörper ein veränderbarer Abstand zumindest teilweise in der Längserstreckung des Hülsenkörpers vorgesehen, welcher sich bei ansteigendem Überdruck des Mediums im Behälter vergrössert und dadurch der Behälter geöffnet und sich dieser Abstand bei Absinken des Überdrucks verringert und der Behälter geschlossen wird.

Auf diesem Hülsenkörper ist zweckmässigerweise ein verstellbares Schliesselement gelagert, welches vorzugsweise als eine hin- und herverschiebbare Hülle ausgebildet ist. Mit dieser Hülle ist in ihrem Schliesszustand die Dichtheit des mit der Verschlusseinrichtung verbundenen Behälters insbesondere beim Konservieren sichergestellt.

Die Erfindung sowie weitere Vorteile derselben sind nachfolgend anhand von Ausführungsbeispielen unter Bezugnahme auf die Zeichnung näher erläutert. Es zeigt:
- Fig. 1: eine perspektivisch dargestellte erfindungsgemässe Verschlusseinrichtung und einen mit dieser verbundenen Behälter;
- Fig. 2: eine Draufsicht auf die Verschlusseinrichtung nach Fig. 1;
- Fig. 3: einen Längsschnitt durch die Verschlusseinrichtung nach Fig. 1; und
- Fig. 4: einen Querschnitt entlang der Linie IV - IV der Verschlusseinrichtung nach Fig. 3.

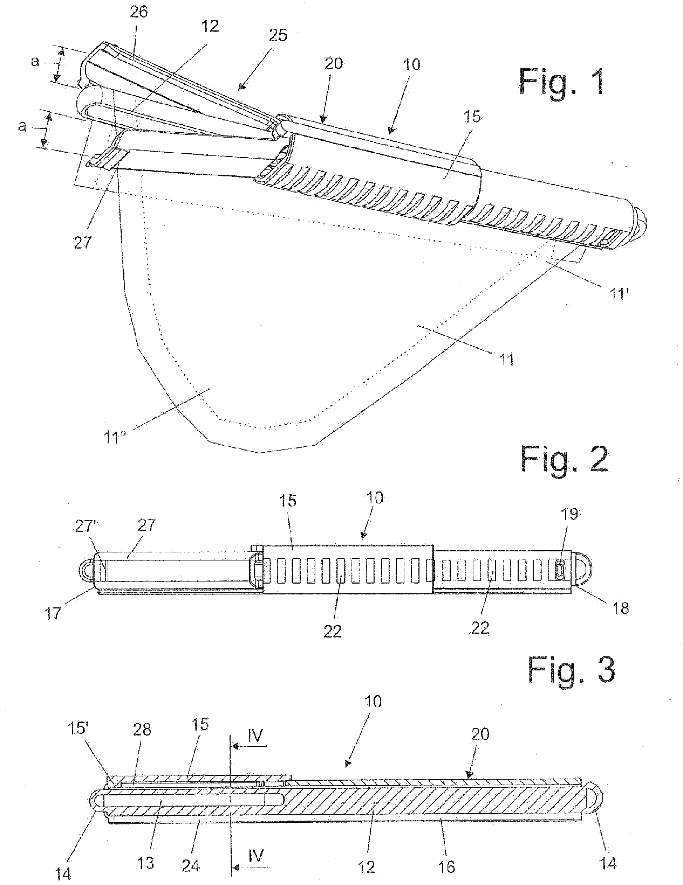

Fig. 1 bis Fig. 4 veranschaulichen eine erfindungsgemässe Verschlusseinrichtung 10, welche ein inneres längliches Halteelement 12 sowie ein dieses umgebenden Hülsenkörper 20 aufweist. Auf diesem Hülsenkörper 20 ist ein verstellbares Schliesselement gelagert, welches als eine hin- und herverschiebbare Hülle 15 ausgebildet ist. Sie befindet sich in der in Fig. 1 gezeigten Stellung annähernd in der Mitte des Hülsenkörpers 20 in der nachfolgend erläuterten Offenstellung, indes gemäss Fig. 3 ist sie in die Schliessstellung geschoben. Diese Hülle 15, die mit einer Länge weniger als die halbe Länge des Hülsenkörpers 20 dimensioniert ist, weist einen Längsschlitz 16 gleichsam wie derjenige des Hülsenkörpers 20 auf. Selbstverständlich könnte diese Hülle 15 in der Länge und Form anders aussehen.

Fig. 1 zeigt die Verschlusseinrichtung 10 und einen mit einer Öffnung versehenen Behälter 11, welcher durch den Längsschlitz 16 und um dieses Halteelement 12 herum zwischen diesem und dem Hülsenkörper 20 sowie wiederum durch den Längsschlitz 16 im Hülsenkörper und in der Hülle 15 hindurchgeführt ist, wobei der vorzugsweise als Dampf-Garbeutel ausgebildete Behälter 11 vorteilhaft mit seinem Ende 11' mit der Öffnung von der Verschlusseinrichtung 10 gehalten ist.

Bei der einen Stirnseite 17 der Verschlusseinrichtung 10 ist zwischen dem Hülsenkörper 20 und dem Halteelement 12 eine ringförmige Schlitzöffnung gebildet, indes die gegenüberliegende Stirnseite 18 geschlossen ist, bei dem durch ein lösbares Befestigungsmittel 19 der Hülsenkörper 20 am Halteelement 12 fixiert ist. Dieses Befestigungsmittel 19 setzt sich zum Beispiel aus wenigstens einem Nocken im Halteelement und einem Schlitz in dem Hülsenkörper oder umgekehrt zusammen, bei dem dieser Nocken in den Schlitz ragt. Gegenüberliegend ist in dem Halteelement 12 mit Vorteil mit eine längliche Ausnehmung 13 enthalten, die derart angeordnet ist, dass das Halteelement gegen den unteren Längsschlitz 16 hin biegbar ist. Zudem ist dem Halteelement 12 beidseitig je eine vorstehende Lasche 14 zugeordnet.

In diese ringförmige Öffnung bei der Stirnseite 17 kann der Behälter 11 in der Offenstellung der Hülle 15 eingeschoben werden, indem sein oberes Ende 11' gebogen und dabei ein Biegeradius gebildet wird, der etwa demjenigen dieser ringförmigen Öffnung entspricht. Sodann kann er eingeschoben werden bis seine gesamte Breite über das Halteelement 12 gestülpt ist, wie in Fig. 1 veranschaulicht ist. Beim Wegnehmen kann der Behälter wiederum bei geöffneter Hülle 15 einfach rausgeschoben oder rausgezogen werden.

Der Hülsenkörper 20 umgibt den Behälter 11 in der Schliessstellung der Hülle 15 nahezu um 360° und dies über seine gesamte Behälterbreite annähernd ohne Spiel. Damit ist gewährleistet, dass das innere des Behälters gegen aussen luftdicht abgeschlossen ist und damit rohes oder gegartes Nahrungsmittel darin über längere Zeit in diesem frisch ohne Geschmacks- und Nährwertverluste aufbewahrt werden kann.

Ausserdem kann mit diesem luftdichten Abschliessen ein Vakuumeffekt vorzugsweise durch Schock-Kühlen des gegarten Gutes im Behälter erzielt werden. Dies gewährleistet eine lange Haltbarkeit unter Eigenvakuum ohne Konservierungsmittel.

Dieser Behälter 11 kann je nach Anwendung unterschiedlich ausgestaltet sein und es wird für diesen sehr vorteilhaft ein an sich bekannter hitzebeständiger, mikrowellentauglicher und/oder druckstabiler Beutel verwendet, mittels dem Nahrungsmittel aller Art gegart, gekocht, konserviert und/oder transportiert werden können. Dieser Beutel sollte daher bei Temperaturen über dem Siedepunkt von Wasser bis über 100°C und/oder bei Überdrücken von annähernd 0.5 bar beständig sein. Zudem sollte er eine solche Beschaffenheit aufweisen, dass er in einem Mikrowellengerät nicht beschädigt wird und keinerlei Kontaminationen abgibt. Als Nahrungsmittel eignen sich Gemüse, Reis, Fisch, Fleisch, Früchte, Stärkebeilagen oder auch solche in flüssiger Form, wie Suppen, Saucen, Cremen und vieles weiteres. Diese Nahrungsmittel können einzeln oder auch zwei oder mehrere zusammen in einem Behälter gegart werden.

Der üblicherweise aus einem durchsichtigen biegbaren Kunststoff hergestellte Behälter 11 besteht bei seinem oberen Ende 11' aus einer Öffnung und zwei Seitenwänden. Beim unteren Ende 11" ist der Behälter 11 mit einem gefalteten Boden zwischen den beiden Seitenwänden versehen. Dieser Boden kann aufgeklappt werden und er ist damit quer zu den Seitenwänden verlaufend flächig ausgebildet, um das innere Behältervolumen zu vergrössern.

Vorzugsweise ist der Behälter bei Nichtgebrauch blattförmig zusammengedrückt, währenddem er im offenen Zustand auf seinen Seitenwänden stehen kann. Deshalb ist er zweckmässigerweise aus einem ausreichend dicken stabilen Plastik gefertigt. Wenn die Verschlusseinrichtung 10 beim oberen Ende montiert ist, sind die Seitenwände gemeinsam um dieses Halteelement 12 aneinanderliegend geführt und vom Hülsenkörper 20 an dieses Halteelement 12 geklemmt und somit der Behälter 11 geschlossen ist. Es sind ferner beim Hülsenkörper und der Hülle beidseitig noch reihenweise Rippen 22 für ein besseres Halten von Hand angeordnet.

Bei dem erfindungsgemässen Verfahren zum Garen von Nahrungsmittel in dem Behälter 11 ist diese Verschlusseinrichtung 10 mit einem Überdruckventil 25 ausgestattet, durch welches der Behälter 11 bei dem bestimmten Überdruck des Mediums geöffnet bzw. beim Absinken des Überdrucks geschlossen wird.

Zur Bildung dieses Überdruckventils 25 ist zwischen dem inneren Halteelement 12 und dem Hülsenkörper 20 ein veränderbarer Abstand a teilweise quer zur Längserstreckung des Hülsenkörpers 20 erzeugbar, welcher sich bei erhöhendem Überdruck des Mediums im Behälter 11 durch die Volumenausdehnung von letzterem vergrössert und sich dadurch der Behälter öffnen kann. Durch dieses Öffnen wird der Überdruck im Behälter wieder verringert und damit reduziert sich die Volumenausdehnung des Behälters und entsprechend auch dieser Abstand a, so dass der Behälter wieder geschlossen wird. Dieses Öffnen und Schliessen des Überdruckventils bzw. des Behälters wiederholt sich dann taktweise mehrere Male oder durch ein einmaliges Öffnen und zwar bis das Aufwärmen des Nahrungsmittels beispielsweise in einem Mikrowellengerät oder einem Steamer beendet ist.

Dieses Überdruckventil 25 funktioniert dabei in der Weise, dass sich der Behälter 11 beim Garen durch die Erwärmung des Mediums, bei dem es sich um die darin befindliche Luft und/oder Dampf handelt, ballonartig ausdehnt und bei einem entstehenden bestimmten Überdruck, zum Beispiel 0.2 bar, der Behälter diese Abstandvergrösserung auf den Hülsenkörper 20 bewirkt.

Vorteilhaft ist der Hülsenkörper 20 mit einem Verstellmittel 25 versehen, welches derart ausgebildet ist, dass dieser Abstand a zwischen ihm und dem Halteelement 12 selbsttätig veränderbar ist. In der drucklosen Ausgangsposition umgibt dieses Verstellmittel 25 das Halteelement 12 annähernd spielfrei, so dass der Behälter geschlossen ist, auch wenn sich die Hülle 15 in der Offenstellung wie gemäss Fig. 1 befindet. Hingegen im Zustand des Überdrucks wird dieses Verstellmittel 25 vom Behälter 11 nach aussen gedrückt.

Dieses Verstellmittel 25 des Hülsenkörpers 20 ist durch zwei Spreizarme 26, 27 gebildet, die sich vom mittleren Bereich des Hülsenkörpers bis zum einen Ende des Halteelementes 12 bei der Stirnseite 17 erstrecken.

Vorzugsweise sind diese Spreizarme 26, 27 und der übrige hülsenfömige Teil des Hülsenkörpers 20 aus einem Material gefertigt. Sie könnten aber auch getrennt voneinander hergestellt und jeweils durch ein entsprechendes federbelastetes Gelenk gekoppelt sein. Diese Spreizarme 26, 27 sind beidseitig zum Halteelement 12 und in gleicher Richtung wie dieses verlaufend angeordnet. Sie sind aber biegbar ausgebildet und können nach aussen gedrückt werden. Sie bilden oben und unten je einen Längsschlitz 16, 28, wobei der obere als Führungsnut für einen Nocken 15' der Hülle 15 dient, damit diese einwandfrei längsgeführt ist. Ferner sind den Spreizarmen endseitig aussen noch je ein vorstehender Anschlag 27' zugeordnet, durch welche die Hülle 15 nicht vom Hülsenkörper weggeschoben werden kann.

In der drucklosen Ausgangsposition umgeben diese beiden gegenüberliegenden Spreizarme 26, 27 das Halteelement 12 annähernd parallel zu diesem. Bei montiertem Behälter 11 im Überdruckzustand werden diese Spreizarme 26, 27 von ihm nach aussen gebogen, wie in Fig. 1 ersichtlich ist, so dass der Behälter zumindest teilweise geöffnet wird, bei dem dieser Abstand a zu dem Halteelement 12 endseitig bei den Spreizarmen besteht.

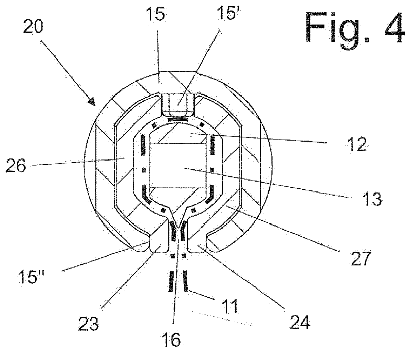

Bei dem dargestellten Querschnitt der Verschlusseinrichtung 10 gemäss Fig. 4, bei dem die Hülle 15 in die Schliessstellung geschoben ist, ist strichpunktiert ein Teil des Behälters 11 angedeutet, welcher durch den Längsschlitz 16 und um das Halteelement 12 herum und wieder durch den Längsschlitz geführt ist. Die beiden gegenüberliegenden Spreizarme 26, 27 weisen bei diesem Längsschlitz 16 je eine untere Führungsschiene 23, 24 auf, die aussenseitig je mit einer Stirnfläche 15" in dem Schlitz der Hülle 15 in Gleitkontakt stehen. Es ist ausserdem noch diese längliche Ausnehmung 13 des Halteelements 12 ersichtlich.

Die Erfindung ist mit dem oben erläuterten Ausführungsbeispiel ausreichend dargetan. Sie könnte aber noch durch andere Varianten erläutert sein. So könnte dieses Verstellmittel beim Hülsenkörper als ein federgestütztes Plattenelement oder dergleichen ausgebildet sein, bei dem der Abstand zwischen diesem und dem Halteelement selbsttätig veränderbar wäre, wobei dieses Plattenelement von einer Feder in die Schliessstellung gedrückt würde.

Auch dieses Schliesselement auf dem Hülsenkörper könnte theoretisch weggelassen oder anders als so eine verstellbare Hülle längsverschiebbar und/oder verschwenkbar angeordnet sein. So könnte anstelle dieser Hülle ein den Hülsenkörper umgebender Bügel oder ähnliches vorgesehen sein, der in der Schliessstellung den Hülsenkörper umgebend arretierbar und für das Öffnen aufklappbar wäre.

## Patentansprüche

1. Verschlusseinrichtung für einen Behälter zum Garen von Nahrungsmittel, **dadurch gekennzeichnet, dass**
die Verschlusseinrichtung (10) wenigstens ein inneres längliches Halteelement (12) sowie mindestens ein dieses umgebenden Hülsenkörper (20) aufweist, bei der dieser mit einer Öffnung versehene Behälter (11) zwischen dieses Halteelement (12) und den Hülsenkörper (20) sowie durch einen Längsschlitz (16) in letzterem führbar ist, wobei das Halteelement (12) und der dieses umgebende Hülsenkörper (20) derart ausgestaltet sind, dass sie ein Überdruckventil (25) bilden, durch welches der beim Erwärmen von einer Schliess- in eine Offenstellung und umgekehrt bringbare Behälter (11) bei dem bestimmten Überdruck des Mediums darin geöffnet bzw. beim Absinken des Überdrucks geschlossen wird.

2. Verschlusseinrichtung nach Anspruch 1, **dadurch gekennzeichnet, dass**
zur Bildung des Überdruckventils (25) zwischen dem inneren Halteelement (12) und dem Hülsenkörper (20) ein veränderbarer Abstand (a) zumindest teilweise quer zur Längserstreckung des Hülsenkörpers (20) erzeugbar ist, welcher sich durch die Volumenausdehnung bei erhöhendem Überdruck des Mediums des Behälters (11) vergrössert und dadurch der Behälter geöffnet und sich dieser Abstand (a) bei Absinken des Überdrucks und der Volumenausdehnung des Behälters (11) verringert und er geschlossen wird.

3. Verschlusseinrichtung nach Anspruch 1, **dadurch gekennzeichnet, dass**
der Hülsenkörper (20) ein Verstellmittel (25) aufweist, welches derart ausgebildet ist, dass der Abstand (a) zwischen diesem und dem Halteelement (12) selbsttätig veränderbar ist und es in der drucklosen Ausgangsposition dieses Verstellmittel (25) das Halteelement (12) annähernd spielfrei umgibt, so dass der Behälter geschlossen ist.

4. Verschlusseinrichtung nach Anspruch 3, **dadurch gekennzeichnet, dass**
das Verstellmittel (25) des Hülsenkörpers (20) als Spreizarme (26, 27) ausgebildet ist, die in der drucklosen Ausgangsposition bei geschlossener Stellung in Richtung des Halteelementes (12) ausgerichtet sind und in der gespreizten Stellung, bei der dieser Behälter (11) zumindest teilweise geöffnet ist, den vergrösserten Abstand (a) zu dem Halteelement (12) bilden.

5. Verschlusseinrichtung nach einem der vorhergehenden Ansprüche 1 bis 4, **dadurch gekennzeichnet, dass**
auf diesem Hülsenkörper (20) wenigstens ein verstellbares Schliesselement gelagert ist, welches von einer das Verstellmittel (25) blockierenden Stellung in eine den Hülsenkörper (20) zumindest einseitig beim Verstellmittel (25) freigebenden Stellung verschiebbar ist.

6. Verschlusseinrichtung nach Anspruch 5, **dadurch gekennzeichnet, dass**
als verstellbares Schliesselement wenigstens eine auf diesem Hülsenkörper (20) hin- und herverschiebbare Hülle (15) gelagert ist, welche eine Länge weniger als die halbe Länge des Hülsenkörpers (20) und einen Längsschlitz wie der Hülsenkörper aufweist.

7. Verschlusseinrichtung nach einem der vorhergehenden Ansprüche 1 bis 6, **dadurch gekennzeichnet, dass**
der Hülsenkörper (20) in der den Behälter (11) verschliessenden Stellung das innere Halteelement (12) über seine gesamte Länge annähernd ohne Spiel umgibt.

8. Verschlusseinrichtung nach einem der vorhergehenden Ansprüche 1 bis 7, **dadurch gekennzeichnet, dass**
zwischen dem Hülsenkörper (20) und dem Halteelement (12) bei der einen Stirnseite (17) eine ringförmige Schlitzöffnung für das Einschieben des Behälters (11) gebildet ist, indes bei der gegenüberliegenden Stirnseite (18) ein lösbares Befestigungsmittel (19) vorgesehen ist, durch welches der Hülsenkörper (20) am Halteelement (12) fixiert ist.

9. Verschlusseinrichtung nach einem der vorhergehenden Ansprüche 1 bis 8, **dadurch gekennzeichnet, dass**
der Behälter (11) hitzebeständig bei Temperaturen über dem Siedepunkt von Wasser bis über 100°C ist und druckstabil bei Überdrücken von bis zu annähernd 0.5 bar beständig ist.

10. Verschlusseinrichtung nach einem der vorhergehenden Ansprüche 1 bis 9, **dadurch gekennzeichnet, dass**
der Behälter (11) eine solche Beschaffenheit aufweist, dass er in einem Mikrowellengerät nicht beschädigt wird bzw. keinerlei Kontaminationen abgibt.

## Claims

1. A closing device for a container for cooking food, **characterised in that**
the closing device (10) has at least one inner longitudinal retaining element (12) and at least one sleeve body (20) surrounding same, in which this container (11) provided with an opening can be guided between this retaining element (12) and the sleeve body (20) as well as through a longitudinal slit (16) into the latter, wherein the retaining element (12) and the sleeve body (20) surrounding same are designed such that they form a pressure relief valve (25), through which the container (11), which can be brought from a closed position into an open position and vice versa during heating, is opened at a specific excess pressure of the medium, and respectively closed when the excess pressure drops.

2. The closing device according to claim 1, **characterised in that** to form the pressure relief valve (25) a modifiable distance (a) can be produced at least partially transverse to the longitudinal extension of the sleeve body (20), between the inner retaining element (12) and the sleeve body (20), which distance is increased as a result of the volume dilatation when the excess pressure of the medium of the container (11) increases, and the container thereby opens, and this distance (a) is reduced when the excess pressure drops and the volume dilatation of the container (11) is reduced and it is closed.

3. The closing device according to claim 1, **characterised in that** the sleeve body (20) has an adjustment means (25), which is designed such that the distance (a) between this and the retaining element (12) can be changed automatically and the retaining element (12) surrounds this adjustment means (25) in the unpressurised starting position in approximately play-free manner, with the result that the container is closed.

4. The closing device according to claim 3, **characterised in that** the adjustment means (25) of the sleeve body (20) is designed as spreading arms (26, 27) which, in the unpressurised starting position, are oriented in the direction of the retaining element (12) in closed position, and form the increased distance (a) to the retaining element (12) in spread position, in which this container (11) is at least partially opened.

5. The closing device according to one of the preceding claims 1 to 4, **characterised in that**
at least one adjustable closing element is housed on this sleeve body (20), which element can be displaced from a position blocking the adjustment means (25) into a position releasing the sleeve body (20) on at least one side of the adjustment means (25).

6. The closing device according to claim 5, **characterised in that** at least one cover (15) which can be moved forwards and backwards on this sleeve body (20) is housed as adjustable closing element, which cover is less than half as long as the sleeve body (20), and has a longitudinal slit like the sleeve body.

7. The closing device according to one of the preceding claims 1 to 6, **characterised in that**
in the position closing the container (11), the sleeve body (20) surrounds the inner retaining element (12) over its entire length, in approximately play-free manner.

8. The closing device according to one of the preceding claims 1 to 7, **characterised in that**
an annular slit opening for pushing in the container (11) is formed between the sleeve body (20) and the retaining element (12) at the one front end (17), while a detachable fastening means (19) is provided through which the sleeve body (20) is fixed to the retaining element (12), at the opposite front end (18).

9. The closing device according to one of the preceding claims 1 to 8, **characterised in that**
the container (11) is heat-resistant at temperatures in excess of the boiling point of water up to more than 100°C, and is durable in pressure-stable manner at excess pressures of up to approximately 0.5 bar.

10. The closing device according to one of the preceding claims 1 to 9, **characterised in that**
the container (11) has a composition such that it does not become damaged in a microwave device, nor does it give off any contamination whatsoever.

## Revendications

1. Dispositif de fermeture d'un récipient de cuisson de produits alimentaires, **caractérisé en ce que**
le dispositif (10) de fermeture a au moins un élément (12) de maintien intérieur oblong, ainsi qu'au moins un corps (20) de manchon entourant celui-ci, dans lequel ce récipient (11), pourvu d'une ouverture, peut être guidé entre cet élément (12) maintien et le corps (20) de manchon ainsi que par une fente (16) oblongue dans cette dernière, dans lequel l'élément (12) de maintien et le corps (20) de manchon entourant celui-ci sont conformés de manière à former une soupape (25) de surpression, par laquelle le récipient (11), pouvant passer au chauffage d'une position de fermeture à une position d'ouverture et inversement, s'ouvre à la surpression déterminée du milieu, qui s'y trouve, et se ferme, lorsque la surpression s'abaisse.

2. Dispositif de fermeture suivant la revendication 1, **caractérisé en ce que**
pour la formation de la soupape (25) de surpression, il peut être produit, entre l'élément (12) intérieur de maintien et le corps (20) de manchon, une distance (a) variable au moins en partie transversalement à l'étendue longitudinale du corps (20) du manchon, qui s'agrandit par l'extension de volume, alors que la surpression du milieu dans le récipient (11) s'élève et qu'ainsi le récipient s'ouvre et cette distance (a) diminue, lorsque s'abaisse la surpression et l'extension du volume du récipient (11) et celui-ci se ferme.

3. Dispositif de fermeture suivant la revendication 1, **caractérisé en ce que**
le corps (20) de manchon a un moyen (25) de réglage, qui est constitué de manière à ce que la distance (a) entre celui-ci et l'élément (12) de maintien puisse être modifiée automatiquement et de manière à entourer, à peu près sans jeu, l'élément (12) de maintien dans la position initiale sans pression de ce moyen (25) de réglage, de sorte que le récipient est fermé.

4. Dispositif de fermeture suivant la revendication 3, **caractérisé en ce que**
le moyen (25) de réglage du corps (20) de manchon est constitué sous la forme de bras (26, 27) d'écartement, qui, dans la position initiale sans pression en position fermée, sont dirigés dans la direction de l'élément (12) de maintien et, dans la position écartée, dans laquelle ce récipient (11) est ouvert au moins en partie, forment la distance (a) agrandie à l'élément (12) de maintien.

5. Dispositif de fermeture suivant l'une des revendications 1 à 4 précédentes, **caractérisé en ce que**,
sur le corps (20) de manchon, est monté au moins un élément de fermeture réglable, qui peut être déplacé d'une position bloquant le moyen (25) de réglage à une position dégageant le corps (20) de manchon au moins d'un côté le moyen (25) de réglage.

6. Dispositif de fermeture suivant la revendication 5, **caractérisé en ce que**,
comme élément de fermeture réglable, est monté au moins une douille (15), qui peut aller et venir sur ce corps (20) de manchon et qui a une longueur plus petite que la demi-longueur du corps (20) de manchon et une fente oblongue comme le corps de manchon.

7. Dispositif de fermeture suivant l'une des revendications 1 à 6 précédentes, **caractérisé en ce que**
le corps (20) de manchon entoure, dans la position fermant le récipient (11), l'élément (12) intérieur de maintien, à peu près sans jeu, sur toute sa longueur.

8. Dispositif de fermeture suivant l'une des revendications 1 à 7 précédentes, **caractérisé en ce qu'**
il est formé, entre le corps (20) de manchon et l'élément (12) de maintien à un côté (17) frontal, une ouverture annulaire en fente pour l'insertion du récipient (11) par le fait qu'il est prévu, au côté (18) frontal opposé, un moyen (19) de fixation amovible, par lequel le corps (20) de manchon est fixé à l'élément (12) de maintien.

9. Dispositif de fermeture suivant l'une des revendications 1 à 8 précédentes, **caractérisé en ce que**
le récipient (11) résiste à la température à des températures au-delà du point de fusion de l'eau allant jusqu'à 100°C et est résistant, d'une manière stable à la pression, à des surpressions allant jusqu'à peu près 0,5 bar.

10. Dispositif de fermeture suivant l'une des revendications 1 à 9 précédentes, **caractérisé en ce que**
le récipient (11) a une propriété telle qu'il n'est pas endommagé dans un appareil à micro-ondes et ne donne aucune sorte de contamination.
